# EUROPÄISCHE PATENTSCHRIFT

(11) **EP 2 696 029 B1**
(45) Veröffentlichungstag und Bekanntmachung des Hinweises auf die Patenterteilung: **07.10.2015**
(21) Anmeldenummer: 12179761.7
(22) Anmeldetag: 09.08.2012
(51) Int. Cl.: F01D 5/14

(54) **Schaufelgitter mit Seitenwandkonturierung und Strömungsmaschine**
Blade row with side wall contours and fluid flow engine
Grille d'aube avec définition de contour de la paroi latérale et turbomachine

(43) Veröffentlichungstag der Anmeldung: 12.02.2014
(73) Patentinhaber: MTU Aero Engines AG, 80995 München (DE)
(72) Erfinder: Dr. Mahle, Inga, 81669 München (DE); Brettschneider, Markus, 80995 München (DE)

(56) Entgegenhaltungen:
- EP-A1- 1 712 737
- EP-A1- 2 136 033
- DE-A1-102008 021 053
- US-A1- 2007 258 819
- US-A1- 2011 014 056

## Beschreibung

Die Erfindung betrifft eine Strömungsmaschine und ein Schaufelgitter für eine Strömungsmaschine nach dem Oberbegriff des Patentanspruchs 1, wie beispielsweise aus den Druckschriften DE 10 2008 021 053 A1, EP 1 712 737 A1 und EP 2 136 033 A1 bekannt ist.

Eine durch einen Strömungskanal geführte Fluidströmung wird durch einen seitlichen Druckgradienten parallel zur Seitenwandung abgelenkt. Da wandnahe Strömungsschichten aufgrund ihrer geringen Geschwindigkeit stärker als wandferne Strömungsschichten abgelenkt werden, wird eine Sekundärströmung gebildet, die einer Hauptströmung überlagert ist. Dies führt unter anderem zu Druckverlusten. Die Sekundärströmungen treten regelmäßig in Schaufelgittern von Strömungsmaschinen wie Gas- und Dampfturbinen auf. Die Schaufelgitter bestehen aus einer Vielzahl von in Umfangsrichtung nebeneinander angeordneten Schaufeln bzw. Schaufelblättern, die in einem rotationssymmetrischen Strömungskanal angeordnet sind und zwischen denen jeweils ein Schaufelkanal ausgebildet ist, in dem die Sekundärströmungen entstehen. Die Schaufelkanäle sind in Radialrichtung jeweils von einer radial äußeren gehäuseseitigen Seitenwandung bzw. äußeren Begrenzungswand und von einer radial inneren nabenseitigen Seitenwandung bzw. inneren Begrenzungswand begrenzt. Gebildet werden die Begrenzungswände durch einen feststehenden Gehäuseabschnitt, durch einen Rotorabschnitt, durch radial innere Schaufeldeckplatten und/oder durch radial äußere Schaufeldeckplatten. In Umfangsrichtung sind die Schaufelkanäle jeweils durch eine Druckseitenwandung und eine Saugseitenwandung der benachbarten Schaufeln begrenzt. Zur Verringerung der Sekundärströmungen bzw. Kanalwirbel werden in die Seitenwandungen häufig nicht-axialsymmetrische Konturierungen in Form von Erhebungen und/oder Vertiefungen eingebracht.

Aus dem Stand der Technik ist eine Vielzahl von nicht-axialsymmetrischen Seitenwandkonturierungen bekannt. So wird beispielsweise in der US 2008/026772 A1 vorgeschlagen, einen höchsten Abschnitt einer druckseitigen Erhebung stromaufwärts eines tiefsten Abschnittes einer saugseitigen Vertiefung anzuordnen. In der US 2006/0233641 A1 ist eine Seitenwandkonturierung gezeigt, bei der sich eine druckseitige Erhebung und eine saugseitige Vertiefung über die gesamte axiale Schaufelblattlänge erstrecken. In der US 2010/0080708 A1 ist eine Seitenwandkontierung mit einer druckseitigen Erhebung, deren höchster Abschnitt im Bereich der Anströmkante angeordnet ist, und mit einer saugseitigen Vertiefung gezeigt, deren tiefster Abschnitt im Bereich der größten Quererstreckung des Schaufelblattes angeordnet ist. Die DE 10 2008 021 053 A1 zeigt eine Seitenwandkonturierung, bei der sich eine druckseitige Erhebung in einem Bereich von 0 bis 60 % einer Schaufelblattprofilsehne und eine saugseitige Vertiefung in einem Bereich von 20 % bis 75 % der Profilsehne erstrecken. Dabei sind der höchste Abschnitt der Erhebung und der tiefste Abschnitt der Vertiefung gegenüberliegend angeordnet.

Aus der US 2011/0014056 A1 ist eine Seitenwandkonturierung bekannt, deren druckseitige Erhebung in einem Bereich von 40 % bis 80 % in axialer Erstreckung des Schaufelblattes und deren saugseitige Vertiefung in einem Bereich von 0 bis 40 % in axialer Schaufelerstreckung angeordnet ist. Dabei ist jeweils ein höchster Abschnitt der Erhebung gegenüber einem tiefsten Abschnitt der Vertiefung angeordnet. Zudem können eine zweite saugseitige Erhebung und eine zweite druckseitige Vertiefung vorgesehen sein, deren extremen Abschnitte gegenüberliegend geordnet sind. Diese bekannten Seitenwandkonturierungen führen zwar zu einer Reduzierung der Sekundärströmungen, weisen jedoch noch ein erhebliches Verbesserungspotenzial auf.

Aufgabe der Erfindung ist es, ein Schaufelgitter für eine Strömungsmaschine mit einer reduzierten Sekundärströmung zu schaffen. Des Weiteren ist es Aufgabe der Erfindung, eine Strömungsmaschine mit einem verbesserten Wirkungsgrad zu schaffen.

Dieser Aufgabe wird gelöst durch ein Schaufelgitter mit den Merkmalen des Patentanspruchs 1 und durch eine Strömungsmaschine mit den Merkmalen des Patentanspruchs 8.

Ein erfindungsgemäßes Schaufelgitter für eine Strömungsmaschine hat zumindest einen Schaufelkanal, der in Umfangsrichtung von einer Druckseitenwandung eines erstens Schaufelblattes und von einer gegenüberliegenden Saugseitenwandung eines benachbarten zweiten Schaufelblattes begrenzt ist. In Radialrichtung ist der Schaufelkanal von zwei gegenüberliegenden Begrenzungswänden begrenzt, wobei zumindest eine der Begrenzungswände im Bereich der Druckseitenwandung mit zumindest einer druckseitigen Erhebung versehen ist und im Bereich der Saugseitenwandung zumindest eine saugseitige Vertiefung aufweist. Erfindungsgemäß sind ein höchster Abschnitt der zumindest einen Erhebung und ein tiefster Abschnitt der zumindest einen Vertiefung in einem Bereich von 30 % bis 60 % einer Erstreckung der Schaufelblätter in Axialrichtung angeordnet, wobei sich axiale Positionen der extremen Abschnitte um maximal 10 % in Axialrichtung voneinander unterscheiden. Ferner lassen sich die Strömungsverluste weiterhin günstig beeinflussen, wenn der Schaufelkanal eine zweite saugseitige Vertiefung im Bereich der Saugseitenwandung aufweist, die stromab der ersten Vertiefung angeordnet ist und durch einen nicht-konturierten Begrenzungswandabschnitt von dieser beabstandet ist. Zusätzlich oder alternativ dazu weist der Schaufelkanal eine zweite druckseitige Erhebung im Bereich der Druckseitenwandung auf, die stromab der ersten Erhebung angeordnet ist und durch einen nicht-konturierten Begrenzungswandabschnitt von dieser beabstandet ist.

Das erfindungsgemäße Schaufelgitter hat eine nicht-axialsymmetrische Seitenwandkonturierung. Durch die Seitenwandkonturierung wird ein statisches Druckfeld an der zumindest einen Begrenzungswand und an den gegenüberliegenden Schaufelblattwandungen im Randbereich so beeinflusst, dass eine Sekundärströmung reduziert wird. Hierdurch werden Strömungsverluste verringert und eine Zuströmung auf ein nachfolgendes Schaufelgitter wird verbessert. "Im Bereich der Druckseitenwandung" und "im Bereich der Saugseitenwandung" bedeuten, dass sich die zumindest eine Erhebung in einem Abstand ≥ Ö zur Druckseitenwandung und die Vertiefung in einem Abstand ≥ 0 zur Saugseitenwandung befinden kann, wobei die zumindest eine Erhebung und die zumindest eine Vertiefung bei einer Beabstandung von der Druckseitenwandung bzw. der Saugseitenwandung nahe zur Druckseitenwandung bzw. Saugseitenwandung und entfernt von der gegenüberliegenden Saugseitenwandung bzw. Druckseitenwandung sind. Dadurch, dass sich die axialen Positionen der extremen Abschnitte um maximal 10 % unterscheiden, kann ihr Abstand in Axialrichtung stromabwärts zunehmen. Hierdurch können die extremen Abstände am hinteren Grenzwert (60%) quasi doppelt so weit voneinander entfernt sein wie am vorderen Grenzwert (30 %).

Bevorzugterweise sind die zumindest eine Erhebung und die zumindest eine Vertiefung in Umfangsrichtung betrachtet durch einen nicht-konturierten Begrenzungswandabschnitt voneinander beabstandet ist. Die Erhebung und die Vertiefung gehen nicht ineinander über und sind somit lokal ausgebildet.

Bevorzugterweise sind die zumindest eine Erhebung und die zumindest eine Vertiefung an den Schaufelblattwandungen stromab von Anströmkanten der Schaufelblätter und stromauf von Abströmkanten der Schaufelblätter angeordnet. Hierdurch kann eine ungestörte Zuströmung einer Hauptströmung auf die Schaufelblätter und eine ungestörte Abströmung der Hauptströmung von den Schaufelblättern erfolgen. Sie können sich jedoch mit einem Abschnitt über die Anströmkante und/oder die Abströmkante hinaus erstrecken.

Bei einem Ausführungsbeispiel ist der höchste Abschnitt der Erhebung stromab des tiefsten Abschnitts der Vertiefung angeordnet.

Bevorzugterweise sind die zweite Erhebung und die zweite Vertiefung in Umfangsrichtung betrachtet durch einen nicht-konturierten Begrenzungswandabschnitt voneinander beabstandet. Die zweite Erhebung und die zweite Vertiefung gehen somit nicht ineinander über und sind lokal ausbildet.

Bevorzugterweise ist ein tiefster Abschnitt der zweiten Vertiefung stromab eines höchsten Abschnittes der zweiten Erhebung angeordnet.

Zur Ermöglichung einer ungestörten Abströmung von den Schaufelblättern können die zweite Erhebung an der Druckseitenwandung und die zweite Vertiefung an der Saugseitenwandung stromauf der Abströmkanten angeordnet sein. Sie können sich jedoch mit einem Abschnitt über die Abströmkanten hinaus erstrecken. Dabei können sich die zweite Erhebung und die zweite Vertiefung mit ihrem höchsten Abschnitt bzw. tiefsten Abstand innerhalb des axialen Bereichs von 30 % bis 60 % der axialen Schaufelblatterstreckung oder außerhalb dieses Bereichs befinden. Zudem können sich die axialen Positionen ihrer extremen Abschnitte um maximal 10 % in Axialrichtung unterscheiden.

Eine bevorzugte Strömungsmaschine hat zumindest ein erfindungsgemäßes Schaufelgitter. Aufgrund der reduzierten Sekundärströmungen bzw. Kanalwirbel weist eine derartige Strömungsmaschine einen verbesserten Wirkungsgrad gegenüber einer Strömungsmaschine mit einem herkömmlichen Schaufelgitter auf.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:
- Figur 1: eine Draufsicht auf ein Ausführungsbeispiel eines Schaufelgitters im Bereich eines Schaufelkanals,
- Figur 2: eine Draufsicht auf ein erstes Ausführungsbeispiels eines erfindungsgemäßen Schaufelgitters im Bereich eines Schaufelkanals, und
- Figur 3: eine Draufsicht auf ein zweites Ausführungsbeispiels eines erfindungsgemäßen Schaufelgitters im Bereich eines Schaufelkanals.

Die folgenden Ausführungsbeispiele werden anhand jeweils eines Schaufelgitters einer axialen Strömungsmaschine wie ein Flugzeugtriebwerk oder eine stationäre Gasturbine beschrieben. Beispielsweise ist das Schaufelgitter in der Niederdruckturbine der Strömungsmaschine angeordnet. Die Erfindung findet jedoch auch Anwendung bei Schaufelgittern für Verdichter in Axialbauweise oder für Verdichter sowie Turbinen in Radial- und Diagonalbauweise.

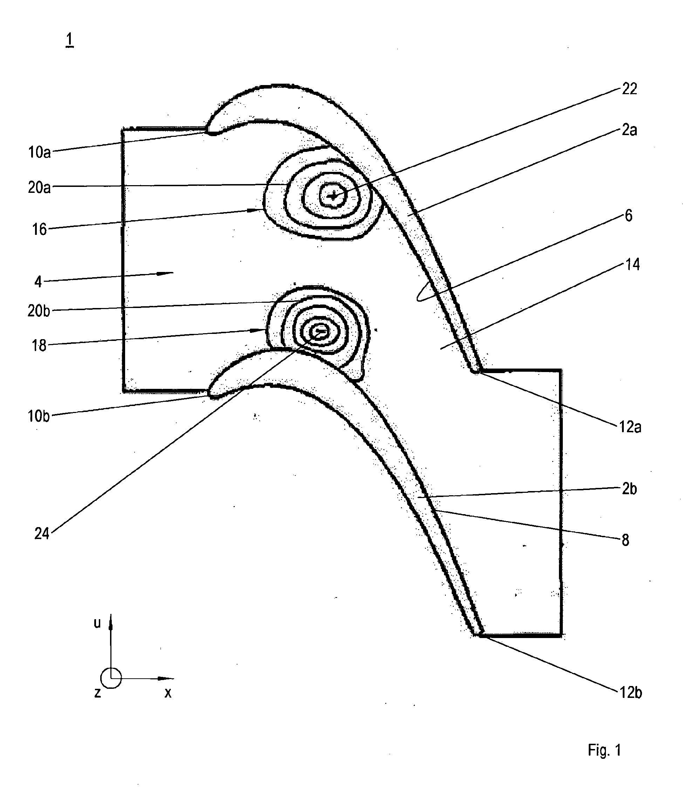

Wie in Figur 1 gezeigt, hat ein Ausführungsbeispiel eines Schaufelgitter 1 eine Vielzahl von Schaufelblättern 2a, 2b, die in Umfangsrichtung u nebeneinander angeordnet sind und jeweils einen Schaufelkanal 4 begrenzen. Das Schaufelgitter 1 wird gemäß Figur 1 von links nach rechts in Axialrichtung x von einer Hauptströmung durchströmt, wobei die Hauptströmung in den Schaufelkanälen 4 in Umfangsrichtung u entsprechend umgelenkt werden. Zudem kann die Hauptströmung vor den Schaufelkanälen 4 als sogenannte Anströmung einen Winkel zur Axialrichtung x aufweisen. Der Einfachheit halber wird aber im Folgenden die Axialrichtung x als Strömungsrichtung betrachtet.

In Umfangsrichtung u betrachtet wird jeder Schaufelkanal 4 von einer Druckseitenwandung 6 des ersten Schaufelblattes 2a und von einer gegenüberliegenden Saugseitenwandung 8 des zweiten Schaufelblattes 2b gebildet, die sich jeweils zwischen einer Anströmkante 10a, 10b und einer Abströmkante 12a, 12b der Schaufelblätter 2a, 2b erstrecken. In Radialrichtung z wird jeder Schaufelkanal 4 von einer nabenseitigen Seitenwandung bzw. inneren Begrenzungswand 14 begrenzt. Zudem wird jeder Schaufelkanal 4 in Radialrichtung z von einer nicht dargestellten gehäuseseitigen Seitenwandung bzw. äußeren Begrenzungswand begrenzt, die aufgrund der Schnittansicht nicht dargestellt ist. Die innere Begrenzungswand 14 wird beispielsweise von einem Rotorabschnitt oder einer schaufelfußseitigen Plattform bzw. einem inneren Deckband gebildet. Die äußere nicht dargestellte Begrenzungswand wird beispielsweise von einem Gehäuseabschnitt oder einem schaufelblattspitzenseitigen äußeren Deckband gebildet und kann wie die innere Begrenzungswand 14 gestaltet sein.

Zumindest die innere Begrenzungswand 14 ist mit einer nicht-axialsymmetrischen Seitenwandkonturierung in Form einer vorderen druckseitigen Erhebung bzw. hügelartigen Einzelkonturierung 16 sowie einer vorderen saugseitigen Vertiefung bzw. talartigen oder senkenartigen Einzelkonturierung 18 versehen. Die Erhebung 16 und die Vertiefung 18 sind zeichnerisch durch eine Vielzahl von Höhen- bzw. Tiefenlinien 20a, 20b mit einem Pluszeichen als höchsten Abschnitt 22 oder einem Minuszeichen als tiefsten Abschnitt 24 dargestellt. Die extremen Abschnitte 22, 24 der Einzelkonturierungen 16, 18 können dabei einheitliche Höhen und Tiefen oder unterschiedliche Höhen und Tiefen haben. Sie sind jeweils in Umfangsrichtung u voneinander beabstandet, so dass zwischen der Erhebung 16 und der Vertiefung 18 ein dem ursprünglichen Verlauf der inneren Begrenzungswand 14 folgender nicht-konturierter Flächenabschnitt gebildet ist.

Bei dem in Figur 1 gezeigten Ausführungsbeispiel sind die Erhebung 16 und die Vertiefung 18 in Axialrichtung x bzw. Strömungsrichtung betrachtet hinter den Anströmkanten 10a, 10b, und vor den Abströmkanten 12a, 12b an der Druckseitenwandung 6 bzw. der Saugseitenwandung 8 positioniert.

Der höchste Abschnitt 22 der Erhebung 16 und der tiefster Abschnitt 24 der Vertiefung 18 sind in einem Bereich von 30 % bis 60 % einer axialen Erstreckung der Schaufelblätter 2a, 2b angeordnet, wobei sich die axialen Positionen der extremen Abschnitte 22, 24 um maximal 10 % in Axialrichtung x voneinander unterscheiden. Dabei ist bei dem in Figur 1 gezeigten Ausführungsbeispiel der höchste Abschnitt 22 der Erhebung 16 stromab des tiefsten Abschnitts 24 der Vertiefung 18 angeordnet.

Die Erhebung 16 ist ein sich radial nach außen erstreckender Abschnitt der inneren Begrenzungswand 14, der sich in Richtung seines höchsten Abschnitts 22 etwa kegelfömig verjüngt. Die Erhebung 16 ist stromab einer maximalen druckseitigen Krümmung des Schaufelblattes 2a mit einem Fußabschnitt an der Druckseitenwandung 6 angeordnet und mit ihrem höchsten Abschnitt 22 von dieser beabstandet. Bevorzugterweise liegt der höchste Abschnitt 22 in Axialrichtung x betrachtet etwa mittig der Erhebung 16.

Die Vertiefung 18 ist ein sich radial nach innen erstreckender Abschnitt der inneren Begrenzungswand 14, der sich ausgehend von der inneren Begrenzungswand 14 in Richtung seines tiefsten Abschnitts 24 etwa trichterförmig verjüngt. Die Vertiefung 18 liegt im Bereich einer maximalen saugseitigen Krümmung des Schaufelblattes 2b mündungsseitig direkt an der Saugseitenwandung 8 an und ist mit ihrem tiefsten Abschnitt 24 von dieser beabstandet. Bevorzugterweise liegt der tiefste Abschnitt 24 in Axialrichtung x betrachtet etwa mittig der Vertiefung 18.

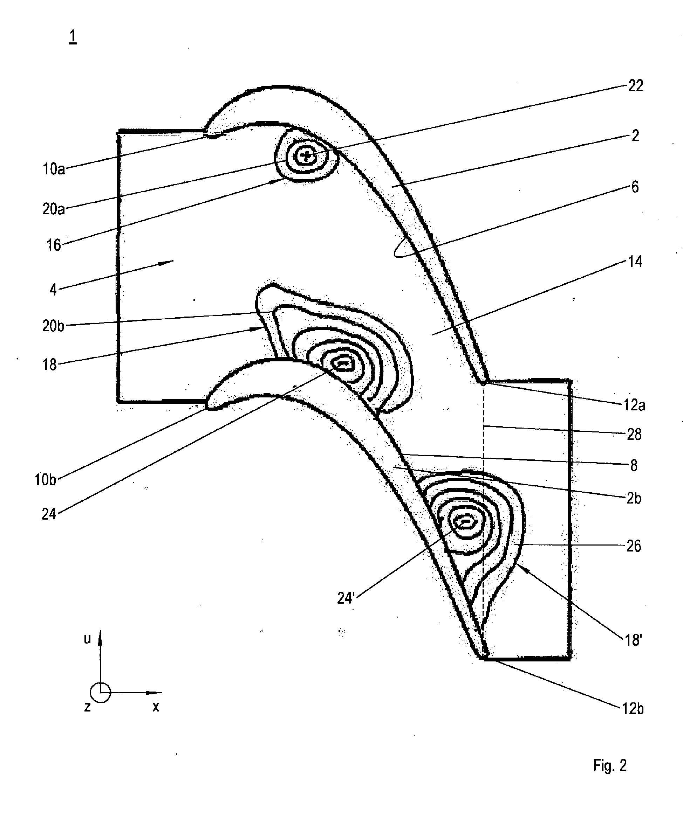

In Figur 2 ist ein erstes Ausführungsbeispiels des erfindungsgemäßen Schaufelgitters 1 gezeigt. Ein Schaufelkanal 4 des Schaufelgitters 1 hat in Axialrichtung x bzw. Strömungsrichtung betrachtet eine vordere druckseitige Erhebung 16, eine vordere saugseite Vertiefung und eine hintere saugseitige Vertiefung 18'. Die druckseitige Erhebung 16 ist an einer Druckseitenwandung 6 eines Schaufelblattes 2a und die saugseitigen Vertiefungen 18, 18' sind an einer Saugseitenwandung 8 eines benachbarten Schaufelblattes 2b angeordnet.

Erfindungsgemäß sind ein höchster Abschnitt 22 der Erhebung 16 und ein tiefster Abschnitt 24 der vorderen Vertiefung 18 in einem Bereich von 30 % bis 60 % einer axialen Erstreckung der Schaufelblätter 2a, 2b angeordnet, wobei sich die axialen Positionen der extremen Abschnitte 22, 24 um maximal 10 % in Axialrichtung x voneinander unterscheiden. Dabei ist bei dem in Figur 2 gezeigten Ausführungsbeispiel der höchste Abschnitt 22 der Erhebung 16 stromauf des tiefsten Abschnitts 24 der vorderen Vertiefung 18 angeordnet. Ein tiefster Abschnitt 24' der hinteren Vertiefung 18' ist bei diesem Ausführungsbeispiel außerhalb des Bereiches bzw. in Axialrichtung x betrachtet jenseits von 60% der axialen Erstreckung des Schaufelblattes 2a positioniert.

Die Erhebung ist ein sich radial nach außen erstreckender Abschnitt der inneren Begrenzungswand 14, der sich in Richtung seines höchsten Abschnitts 22 etwa kegelfömig verjüngt. Sie ist stromab einer maximalen druckseitigen Krümmung des Schaufelblattes 2a mit einem Fußabschnitt an der Druckseitenwandung 6 angeordnet und mit ihrem höchsten Abschnitt 22 von dieser beabstandet. Bevorzugterweise liegt der höchste Abschnitt 22 in Axialrichtung x betrachtet etwa mittig der Erhebung 16.

Die vordere Vertiefung 18 ist ein sich radial nach innen erstreckender Abschnitt der inneren Begrenzungswand 14. Sie liegt im Bereich einer maximalen saugseitigen Krümmung des Schaufelblattes 2b mündungsseitig direkt an der Saugseitenwandung 8 an. Ihr tiefster Abschnitt 24 ist jedoch von der Saugseitenwandung 8 beabstandet. In Umfangsrichtung u betrachtet ist die vordere Vertiefung 18 von der vorderen Erhebung 16 durch einen nicht-konturierten Flächenabschnitt der inneren Begrenzungswand 14 beabstandet. Sie verjüngt sich ausgehend von der inneren Begrenzungswand 14 in Richtung ihres tiefsten Abschnitts 24 etwa trichterförmig, wobei sie stromab ihres tiefsten Abschnitts 24 in Radialrichtung z betrachtet steiler abfällt als stromauf ihres tiefsten Abschnitts 24. Hierdurch hat die vordere Vertiefung 18 eine längliche Erstreckung entlang der Saugseitenwandung 8 und ihr tiefster Abschnitt 24 liegt in Axialrichtung x betrachtet nicht mittig der Vertiefung 18, sondern etwas stromab.

Die hintere Vertiefung 18' liegt stromab der vorderen Vertiefung 18 und ist von dieser durch einen nicht-konturierten Flächenabschnitt der inneren Begrenzungswand 14 beabstandet. Sie ist ein sich radial nach innen erstreckender Abschnitt der inneren Begrenzungswand 14, der sich ausgehend von der inneren Begrenzungswand 14 in Richtung seines tiefsten Abschnitts 24' etwa trichterförmig verjüngt. Die hintere Vertiefung 18' liegt stromauf der Abströmkante 12b mündungsseitig direkt an der Saugseitenwandung 8. Sie erstreckt sich mit einem von der Saugseitenwandung 8 entfernten Abschnittsbereich 26 über eine virtuelle Umfangslinie 28 zwischen den Abströmkanten 12a, 12b hinaus. Die hintere Vertiefung 18' fällt stromauf ihres tiefsten Abschnitts 24' in Radialrichtung z betrachtet steiler ab als stromauf ihres tiefsten Abschnitts 24'. Sie kann tiefer als, weniger tief als oder gleich tief wie die vordere Vertiefung 18 sein. Der tiefste Abschnitt 24' ist von der Saugseitenwandung 8 beabstandet und liegt stromauf der virtuellen Umfangslinie 28 und somit stromauf der Abströmkanten 12a 12b. In dem in Figur 2 gezeigten Ausführungsbeispiel liegt der tiefste Abschnitt 24' in Axialrichtung x betrachtet nahezu mittig der hinteren Vertiefung 18'.

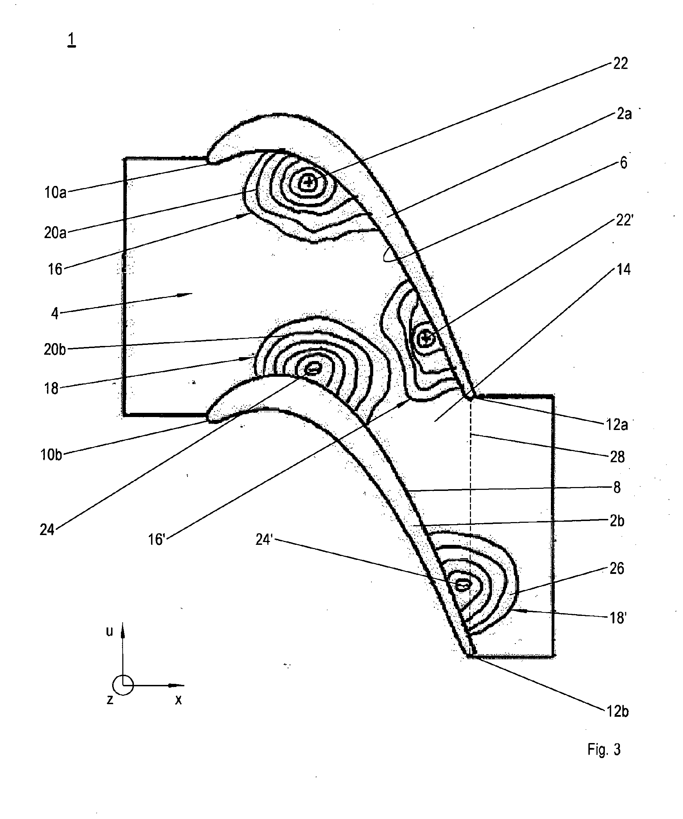

In Figur 3 ist ein zweites Ausführungsbeispiels des erfindungsgemäßen Schaufelgitters 1 gezeigt. Ein Schaufelkanal 4 hat in Axialrichtung x bzw. Strömungsrichtung betrachtet eine vordere druckseitige Erhebung 16, eine hintere druckseitige Erhebung 16', eine vordere saugseite Vertiefung und eine hintere saugseitige Vertiefung 18'. Die druckseitigen Erhebungen 16, 16' sind an einer Druckseitenwandung 6 eines Schaufelblattes 2a und die saugseitigen Vertiefungen 18, 18' sind an einer Saugseitenwandung 8 eines benachbarten Schaufelblattes 2b angeordnet.

Die hintere Erhebung 16' ist in Axialrichtung x betrachtet stromauf der hinteren Vertiefung 18' angeordnet und nahezu mittig zwischen den beiden Vertiefungen 18, 18' positioniert. Ihre extremen Abschnitte 22, 22', 24, 24' können dabei einheitliche Höhen und Tiefen oder unterschiedliche Höhen und Tiefen haben.

Erfindungsgemäß sind ein höchster Abschnitt 22 der vorderen Erhebung 16 und ein tiefster Abschnitt 24 der vorderen Vertiefung 18 in einem Bereich von 30 % bis 60 % einer axialen Erstreckung der Schaufelblätter 2a, 2b angeordnet, wobei sich die axialen Positionen der extremen Abschnitte 22, 24 um maximal 10 % in Axialrichtung x voneinander unterscheiden. Dabei ist bei dem in Figur 3 gezeigten Ausführungsbeispiel der höchste Abschnitt 22 der vorderen Erhebung 16 stromauf des tiefsten Abschnitts 24 der vorderen Vertiefung 18 angeordnet. Ein höchster Abschnitt 22' der hinteren Erhebung 16' sowie ein tiefster Abschnitt 24' der hinteren Vertiefung 18' sind diesem Ausführungsbeispiel außerhalb des Bereiches bzw. in Axialrichtung x betrachtet jenseits von 60% der axialen Erstreckung des Schaufelblattes 2a positioniert.

Die vordere Erhebung 16 ist ein sich radial nach außen erstreckender Abschnitt der inneren Begrenzungswand 14, der sich in Richtung seines höchsten Abschnitts 22 etwa kegelfömig verjüngt. Sie ist in einer maximalen druckseitigen Krümmung des Schaufelblattes 2a angeordnet und erstreckt sich stromab von dieser. Sie liegt mit einem Fußabschnitt an der Druckseitenwandung 6 an und ist mit ihrem höchsten Abschnitt 22 nahe dieser angeordnet. Bevorzugterweise liegt der höchste Abschnitt 22 in Axialrichtung x betrachtet etwa mittig der Erhebung 16.

Die vordere Vertiefung 18 ist ein sich radial nach innen erstreckender Abschnitt der inneren Begrenzungswand 14. Sie liegt im Bereich einer maximalen saugseitigen Krümmung des Schaufelblattes 2b mündungsseitig direkt an der Saugseitenwandung 8 an und ist von der vorderen Erhebung 16 durch einen nicht-konturierten Flächenabschnitt der inneren Begrenzungswand 14 beabstandet. Die vordere Vertiefung verjüngt sich ausgehend von der inneren Begrenzungswand 14 in Richtung seines tiefsten Abschnitts 24 etwa trichterförmig, wobei ihr tiefster Abschnitt 24 nahe zur Saugseitenwandung 8 angeordnet ist. Sie fällt stromauf ihres tiefsten Abschnitts 24 in Radialrichtung z betrachtet steiler ab als stromab ihres tiefsten Abschnitts 24. Hierdurch liegt ihr tiefster Abschnitt 24 in Axialrichtung x betrachtet nicht mittig der Vertiefung 18, sondern etwas stromauf.

Die hintere Erhebung 16' liegt stromab der vorderen Erhebung 16 und ist über einen nicht-konturierten Flächenabschnitt der inneren Begrenzungswand 14 von dieser beabstandet. Sie ist ein sich radial nach außen erstreckender Abschnitt der inneren Begrenzungswand 14, der sich ausgehend von der inneren Begrenzungswand 14 in Richtung seines höchsten Abschnitts 24 verjüngt. Die hintere Erhebung 16' hat eine längliche Erstreckung entlang der Druckseitenwandung 6. Sie liegt stromauf der Abströmkante 12a mündungsseitig direkt an der Druckseitenwandung 6 an und ist vollständig vor einer virtuelle Umfangslinie 28 zwischen den Abströmkanten 12a, 12b angeordnet. Ihr höchster Abschnitt 22' liegt in Axialrichtung x betrachtet etwa mittig der hinteren Erhebung 16' und ist in Umfangsrichtung u betrachtet nahe der Druckseitenwandung 6 angeordnet.

Die hintere Vertiefung 18' liegt stromab der vorderen Vertiefung 18 und ist über einen nicht-konturierten Flächenabschnitt der inneren Begrenzungswand 14 von dieser beabstandet. Zudem ist die hintere Vertiefung 16 über einen nicht-konturierten Flächenabschnitt von der hinteren inneren Begrenzungswand 14 von der hinteren Erhebung 16' beabstandet Sie ist ein sich radial nach innen erstreckender Abschnitt der inneren Begrenzungswand 14. Die hintere Vertiefung 18' liegt stromauf der Abströmkante 12b mündungsseitig direkt an der Saugseitenwandung 8 an. Dabei erstreckt sie sich mit einem von der Saugseitenwandung 8 entfernten Vertiefungsbereich 26 über die virtuelle Umfangsgerade 28 zwischen den Abströmkanten 12a, 12b hinaus. Sie verjüngt sich ausgehend von der inneren Begrenzungswand 14 in Richtung seines tiefsten Abschnitts 24 etwa trichterförmig, wobei sie stromab ihres tiefsten Abschnitts 24' in Radialrichtung z betrachtet steiler abfällt als stromauf ihres tiefsten Abschnitts 24'. Der tiefste Abschnitt 24' liegt nahe der Saugseitenwandung 8 und ist in Axialrichtung x betrachtet etwa mittig der hinteren Vertiefung 18' angeordnet, wobei er stromauf nahe der virtuellen Umfangslinie 28 angeordnet ist.

### Bezugszeichenliste

- 1: Schaufelgitter
- 2a, b: Schaufelblatt
- 4: Schaufelkanal
- 6: Druckseitenwandung
- 8: Saugseitenwandung
- 10a, b: Anströmkante
- 12a, b: Abströmkante
- 14: innere Begrenzungswand
- 16, 16': druckseitige Erhebung
- 18, 18': saugseitige Vertiefung
- 20a, b: Höhen-/Tiefenlinie
- 22, 22': höchster Abschnitt
- 24, 24': tiefster Abschnitt
- 26: Abschnittsbereich
- 28: virtuelle Umfangslinie

- z: Radialrichtung
- u: Umfangsrichtung
- x: Axialrichtung/Strömungsrichtung

## Patentansprüche

1. Schaufelgitter (1) einer Strömungsmaschine, mit zumindest einem Schaufelkanal (4), der in Umfangsrichtung von einer Druckseitenwandung (6) eines ersten Schaufelblattes (2a) und von einer gegenüberliegenden Saugseitenwandung (8) eines benachbarten zweiten Schaufelblattes (2b) begrenzt ist, und der in Radialrichtung (z) von zwei gegenüberliegenden Begrenzungswänden (14) begrenzt ist, wobei zumindest eine der Begrenzungswände (14) im Bereich der Druckseitenwandung (6) mit zumindest einer druckseitigen Erhebung (16) versehen ist und im Bereich der Saugseitenwandung (8) zumindest eine saugseitige Vertiefung (18) aufweist, wobei sich ein höchster Abschnitt (22) der zumindest einen Erhebung (16) und ein tiefster Abschnitt (24) der zumindest einen Vertiefung (18) in einem Bereich von 30% bis 60% einer Erstreckung der Schaufelblätter (2a, 2b) in Axialrichtung (x) befinden und sich axiale Positionen der extremen Abschnitte (22, 24) um maximal 10 % in Axialrichtung (x) voneinander unterscheiden, **dadurch gekennzeichnet, dass** eine zweite saugseitige Vertiefung (18') stromab der ersten Vertiefung (18) im Bereich der Saugseitenwandung (8) angeordnet ist, die durch einen nicht-konturierten Begrenzungswandabschnitt von der ersten Vertiefung beabstandet ist, und/oder dass eine zweite druckseitige Erhebung (16') im Bereich Druckseitenwandung (6) vorgesehen ist, die stromab der ersten Erhebung (16) angeordnet ist und durch einen nicht-konturierten Begrenzungswandabschnitt von dieser beabstandet ist.

2. Schaufelgitter nach Anspruch 1, wobei die Erhebung (16) und die Vertiefung (18) in Umfangsrichtung (u) betrachtet durch einen nicht-konturierten Begrenzungswandabschnitt von dieser beabstandet ist.

3. Schaufelgitter nach Anspruchs 1 oder 2, wobei die Erhebung (16) und die Vertiefung (18) stromab von Anströmkanten (10a, 10b) der Schaufelblätter (2a, 2b) und stromauf von Abströmkanten (12a, 12b) der Schaufelblätter (2a, 2b) angeordnet sind.

4. Schaufelgitter nach Anspruchs 1, 2 oder 3, wobei der höchste Abschnitt (22) der Erhebung (16) stromab des tiefsten Abschnitts (24) der Vertiefung (18) angeordnet ist.

5. Schaufelgitter nach Anspruch 1, wobei die zweite Erhebung (16') und die zweite Vertiefung (18') in Umfangsrichtung (u) betrachtet durch einen nicht-konturierten Begrenzungswandabschnitt voneinander beabstandet sind.

6. Schaufelgitter nach Anspruch 1 oder 5, wobei ein tiefster Abschnitt (24') der zweiten Vertiefung (18') stromab eines höchsten Abschnitts (22') der zweiten Erhebung (16') angeordnet ist.

7. Schaufelgitter nach einem der Ansprüche 1, 5 bis 6, wobei die zweite Erhebung (16') und die zweite Vertiefung (18') stromauf der Abströmkanten (12a, 12b) an der Druckseitenwandung (6) bzw. der Saugseitenwandung (8) angeordnet sind.

8. Strömungsmaschine mit zumindest einem Schaufelgitter (1) nach einem der vorhergehenden Ansprüche.

## Claims

1. Blade row (1) of a continuous flow machine having at least one blade channel (4) which is delimited in the peripheral direction by a pressure-side wall (6) of a first blade leaf (2a) and by an opposite suction-side wall (8) of an adjacent second blade leaf (2b), and which is delimited in the radial direction (2) by two opposite boundary walls (14), wherein at least one of the boundary walls (14) is provided with at least one pressure-side elevation (16) in the region of the pressure-side wall (6) and has at least one suction-side recess (18) in the region of the suction-side wall (8), wherein a highest section (22) of the at least one elevation (16) and a deepest section (24) of the at least one recess (18) are located in the axial direction (x) in a range from 30% to 60% of an extension of the blade leaves (2a, 2b) and axial positions of the extreme sections (22, 24) differ from one another in the axial direction (x) by a maximum of 10%, **characterised in that** a second suction-side recess (18') is arranged in the region of the suction-side wall (8) downstream of the first recess (18), which is spaced apart from the first recess by a non-contoured boundary wall section, and/or that a second pressure-side elevation (16') is provided in the region of the pressure-side wall (6), which is arranged downstream of the first elevation (16) and is spaced apart from this by a non-contoured boundary wall section.

2. Blade row according to claim 1, wherein the elevation (16) and the recess (18), viewed in the peripheral direction (u), is spaced apart from this by a non-contoured boundary wall section.

3. Blade row according to claim 1 or 2, wherein the elevation (16) and the recess (13) are arranged downstream of leading edges (10a, 10b) of the blade leaves (2a, 2b) and upstream of trailing edges (12a, 12b) of the blade leaves (2a, 2b).

4. Blade row according to claim 1, 2 or 3, wherein the highest section (22) of the elevation (16) is arranged downstream of the deepest section (24) of the recess (18).

5. Blade row according to claim 1, wherein the second elevation (16') and the second recess (18'), viewed in the peripheral direction (u), are spaced apart from each other by a non-contoured boundary wall section.

6. Blade row according to claim 1 or 5, wherein a deepest section (24') of the second recess (18') is arranged downstream of a highest section (22') of the second elevation (16').

7. Blade row according to one of claims 1, 5 to 6, wherein the second elevation (16') and the second recess (18') are arranged on the pressure-side wall (6) or the suction-side wall (8) upstream of the trailing edges (12a, 12b).

8. Continuous flow machine having at least one blade row (1) according to one of the preceding claims.

## Revendications

1. Grille d'aube (1) d'une turbomachine, avec au moins un canal d'aube (4), qui est délimité en direction périphérique par une paroi du côté de pression (6) d'une première pale (2a) et par une paroi du côté d'aspiration (8) d'une deuxième pale voisine (2b), et qui est délimité en direction radiale (z) par deux parois de limitation opposées (14), dans laquelle au moins une des parois de limitation (14) est dotée dans la région de la paroi du côté de pression (6) d'au moins une surélévation (16) du côté de pression et dans la région de la paroi du côté d'aspiration (8) d'au moins un creux (18) du côté d'aspiration, dans laquelle une partie très élevée (22) de ladite au moins une surélévation (16) et une partie très profonde (24) dudit au moins un creux (18) se trouvent dans une région de 30 % à 60 % d'une extension des pales (2a, 2b) en direction axiale (x) et des positions axiales des parties extrêmes (22, 24) diffèrent l'une de l'autre de 10 % au maximum en direction axiale (x), **caractérisée en ce qu'**un deuxième creux (18') du côté d'aspiration est disposé en aval du premier creux (18) dans la région de la paroi du côté d'aspiration (8), qui est espacé du premier creux (18) par une partie de paroi de limitation sans contour, et/ou **en ce qu'**il est prévu une deuxième surélévation (16') du côté de pression dans la région de la paroi du côté de pression (6), qui est disposée en aval de la première surélévation (16) et qui est espacée de celle-ci par une partie de paroi de limitation sans contour.

2. Grille d'aube selon la revendication 1, dans laquelle la surélévation (16) et le creux (18) considérés en direction périphérique (u) est espacé de celle-ci par une partie de paroi de limitation sans contour.

3. Grille d'aube selon la revendication 1 ou 2, dans laquelle la surélévation (16) et le creux (18) sont disposés en aval d'arêtes d'attaque (10a, 10b) des pales (2a, 2b) et en amont d'arêtes de fuite (12a, 12b) des pales (2a, 2b).

4. Grille d'aube selon la revendication 1, 2 ou 3, dans laquelle la partie la plus élevée (22) de la surélévation (16) est disposée en aval de la partie la plus profonde (24) du creux (18).

5. Grille d'aube selon la revendication 1, dans laquelle la deuxième surélévation (16') et le deuxième creux (18') considérés en direction périphérique (u) sont espacés l'un de l'autre par une partie de paroi de limitation sans contour.

6. Grille d'aube selon la revendication 1 ou 5, dans laquelle une partie très profonde (24') du deuxième creux (18') est disposée en aval d'une partie très élevée (22') de la deuxième surélévation (16').

7. Grille d'aube selon une des revendications 1, 5 à 6, dans laquelle la deuxième surélévation (16') et le deuxième creux (18') sont disposés en amont des arêtes de fuite (12a, 12b) sur la paroi du côté de pression (6) ou la paroi du côté d'aspiration (8).

8. Turbomachine avec au moins une grille d'aube (1) selon l'une quelconque des revendications précédentes.
